# EUROPÄISCHE PATENTSCHRIFT

(11) **EP 2 175 955 B1**
(45) Veröffentlichungstag und Bekanntmachung des Hinweises auf die Patenterteilung: **08.01.2014**
(21) Anmeldenummer: 08786297.5
(22) Anmeldetag: 22.07.2008
(51) Int. Cl.: B01D 29/15

(54) **RÜCKSPÜLEINRICHTUNG FÜR EINE FILTERANLAGE**
BACKFLUSH DEVICE FOR A FILTER SYSTEM
DISPOSITIF DE LAVAGE À CONTRE-COURANT POUR UNE INSTALLATION DE FILTRAGE

(30) Priorität: 30.07.2007 DE 102007035967
(43) Veröffentlichungstag der Anmeldung: 21.04.2010
(73) Patentinhaber: MAHLE International GmbH, 70376 Stuttgart (DE)
(72) Erfinder: PRACHER, Markus, 74613 Öhringen (DE); SCHICK, Albert, 74336 Brackenheim (DE); STÖTZER, Dietrich, 74613 Öhringen (DE)
(74) Vertreter: BRP Renaud & Partner
(86) Internationale Anmeldenummer: PCT/EP2008/059561
(87) Internationale Veröffentlichungsnummer: WO 2009/016062

(56) Entgegenhaltungen:
- DE-A1- 2 309 666
- DE-A1- 2 327 532
- DE-A1- 2 704 701
- DE-A1- 3 341 786
- DE-A1- 3 611 075
- DE-A1- 4 118 423
- DE-A1- 19 803 083

## Beschreibung

Die vorliegende Erfindung betrifft eine Filteranlage zum Entfernen von Verunreinigungen aus einem Fluid, wobei in der Filteranlage eine Rückspüleinrichtung zum Rückspülen eines in der Filteranlage eine Reinseite von einer Rohseite trennenden Filterkörpers dient, mit den Merkmalen des Oberbegriffs des Anspruchs 1.

Filteranlagen in gewerblichen oder stationären Anwendungen kommen bei einer Vielzahl von Prozessen zum Einsatz, beispielsweise um flüssige oder feste Partikel aus einer Gasströmung oder um feste Partikel aus einer Flüssigkeitsströmung herauszufiltern. Hierzu verwendet die jeweilige Filteranlage zumindest einen Filterkörper, der innerhalb der Anlage einen Rohraum von einem Reinraum trennt. Der Filterkörper weist hierzu ein vom jeweiligen Fluid durchströmbares Filtermaterial auf, das für die herauszufilternden Partikel undurchlässig ist. Im Laufe des Reinigungsbetriebs oder Filtrierbetriebs können sich die ausgefilterten Partikel am Filtermaterial, also am Filterkörper rohseitig ansammeln beziehungsweise ablagern. Hierdurch erhöht sich der Durchströmungswiderstand des Filterkörpers. Um den Filtrierbetrieb nicht oder nur kurzfristig unterbrechen zu müssen, können moderne Filteranlagen mit einer Rückspüleinrichtung ausgestattet sein, mit deren Hilfe der Filterkörper mit einem geeigneten Spülmedium rückspülbar ist. Die Rückspülung erfolgt dann entgegen der Filtrierrichtung, also von der Reinseite zur Rohseite. Hierdurch können die rohseitig am Filterkörper abgelagerten Verunreinigungen entfernt werden. Eine derartige Rückspüleinrichtung kann mit wenigstens einer Rückspüldüse arbeiten, mit deren Hilfe der Filterkörper reinseitig mit dem jeweiligen Spülmedium beaufschlagbar ist. Eine solche Rückspüldüse kann hierzu eine Vielzahl von Öffnungen aufweisen, durch die das Spülmedium beim Rückspülen in einer durch die Längsachse der Öffnung bestimmten Strömungsrichtung strömt und aus der Rückspüldüse austritt. Durch derartige punktuelle Öffnungen tritt das Spülmedium bei einem entsprechenden Rückspüldruck mit einem geradlinigen Strahl oder mit einem sich kegelförmig auffächernden Strahl aus der jeweiligen Öffnung aus und beaufschlagt den Filterkörper in einer entsprechenden kreisförmigen Auftrefffläche.

Aus der DE 198 03 083 A1 ist eine Filteranlage zum Entfernen von Verunreinigungen aus einem Fluid bekannt, die einen zylindrischen Filterkörper, der einen Reinraum von einem Rohraum trennt, und eine Rückspüleinrichtung zum Rückspülen des jeweiligen Filterkörpers aufweist. Die Rückspüleinrichtung ist dabei mit einer Rückspüldüse zur Beaufschlagung des Filterkörpers mit einem gasförmigen Spülmedium ausgestattet, die eine Öffnung aufweist, durch die das Spülmedium beim Rückspülen in einer Strömungsrichtung strömt und aus der Rückspüldüse austritt. Die Öffnung ist dabei als Schlitzöffnung ausgestaltet, die sich quer zur Strömungsrichtung geradlinig mit einem konstanten Querschnittsprofil erstreckt. Die Filteranlage weist außerdem einen Antrieb zum Erzeugen einer relativen Drehverstellung zwischen dem Filterkörper und der Rückspüldüse um eine Längsmittelachse des Filterkörpers auf. Bei der bekannten Filteranlage besitzt die Schlitzöffnung in der Strömungsrichtung einen konstanten Öffnungsquerschnitt.

Weitere Filteranlagen mit segmentweiser Rückspülung des Filterelements sind aus der DE 23 27 532 A, der DE 36 11 075 A1 und der DE 41 18 423 A1 bekannt.

Aus der DE 27 04 701 A ist eine Filteranlage einer anderen Bauart bekannt, bei der mehrere separate Filterelemente vorgesehen ist, die sukzessive rückgespült werden können, wobei jedoch in jedem Fall das jeweilige Filterelement insgesamt, also vollständig und nicht segmentweise rückgespült wird.

Weiter Filteranlagen dieser anderen Bauart sind aus der DE 23 09 666 A und der DE 33 41 786 A1 bekannt.

Die vorliegende Erfindung beschäftigt sich mit dem Problem, für eine mit einer Rückspüleinrichtung ausgestattete Filteranlage eine verbesserte Ausführungsform anzugeben, die sich insbesondere dadurch auszeichnet, dass sie eine verbesserte Rückspülwirkung aufweist.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Rückspüldüse mit einer Schlitzöffnung auszustatten, also mit einer schlitzförmigen Öffnung, die sich quer zur Strömungsrichtung geradlinig mit einem konstanten Querschnittsprofil erstreckt, wobei das Querschnittsprofil erfindungsgemäß einen sich in der Strömungsrichtung aufweitenden Düsenabschnitt aufweist. Durch die Schlitzform der Öffnung wird der Auftreffbereich für das Rückspülmedium an der Reinseite des Filterkörpers rechteckförmig. Insbesondere wird hierdurch über die gesamte Länge der Schlitzöffnung eine gleichmäßige Beaufschlagung des Filterkörpers mit Rückspülmedium erzielt. Dementsprechend ergibt sich auch eine relativ gleichmäßige Rückspülwirkung, was insgesamt zu einer verbesserten Leistungsfähigkeit der Rückspüleinrichtung und somit der damit ausgestatteten Filteranlage führt.

Besonders vorteilhaft ist dabei außerdem das Düsenprofil der Schlitzöffnung, das sich durch den sich in der Strömungsrichtung aufweitenden Düsenabschnitt charakterisiert. Durch das Düsenprofil kann das gasförmige Rückspülmedium in der Schlitzöffnung in der Strömungsrichtung beschleunigt werden, wodurch das Rückspülmedium einen relativ hohen Impuls erhält, der sich zur Erhöhung der Rückspülwirkung am Filterkörper nutzen lässt. Zur Realisierung der intensiven Reinigungswirkung ist erfindungsgemäß weiter vorgesehen, dass die jeweilige Schlitzöffnung in ihrem Querschnittsprofil einen Einlaufabschnitt aufweist, der unmittelbar stromauf an den Düsenabschnitt angrenzt und sich in der Strömungsrichtung reduziert.

Bei einer vorteilhaften Ausführungsform kann die Rückspüldüse einen Düsenkörper aufweisen, der die wenigstens eine Schlitzöffnung enthält, wobei die Rückspüldüse außerdem einen Düsenträger aufweist, in den der Düsenkörper eingesetzt ist. Bei dieser Ausführungsform lassen sich Düsenkörper und Düsenträger separat herstellen, wodurch beispielsweise unterschiedliche Materialien verwendbar sind, die für die jeweilige Funktion des jeweiligen Bauteils optimiert sind.

Bei einer besonders vorteilhaften Ausführungsform einer mit der Rückspüleinrichtung ausgestatteten Filteranlage kann die Rückspüldüse im Filterkörper so angeordnet sein, dass sie in der Strömungsrichtung vom Filterkörper beabstandet ist. Das bedeutet, dass zwischen der Rückspüldüse und dem Filterkörper kein direkter körperlicher Kontakt vorliegt. Ferner kann der Rückspülstrahl, sofern die Rückspülung bei befülltem Filterkörper, insbesondere während des Filtrierbetriebs, durchgeführt wird, durch das an der Reinseite des Filterkörpers vorhandene gereinigte Fluid offen hindurchströmen. Dies ist zwar mit einer erhöhten Reibung verbunden, kann jedoch durch die hohe Strömungsgeschwindigkeit des Rückspülmediums kompensiert werden. Durch die berührungslose Anordnung von Rückspüldüse und Filterkörper kann beispielsweise ein Verschleiß der Rückspüldüse erheblich reduziert werden, wenn eine relative Rotation zwischen Rückspüldüse und Filterkörper verwendet wird, um den Filterkörper in Umfangsrichtung nach und nach, quasi segmentweise durch Rückspülung abzureinigen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Querschnitt durch eine Filteranlage,
- Fig. 2: eine Ansicht einer Rückspüldüse,
- Fig. 3: eine Ansicht wie in Fig. 2, jedoch bei einer anderen Ausführungsform der Rückspüldüse,
- Fig. 4: einen Längsschnitt durch die Rückspüldüse entsprechend Schnittlinien IV in Fig. 2,
- Fig. 5: einen Querschnitt der Rückspüldüse entsprechend Schnittlinien V in Fig. 4.

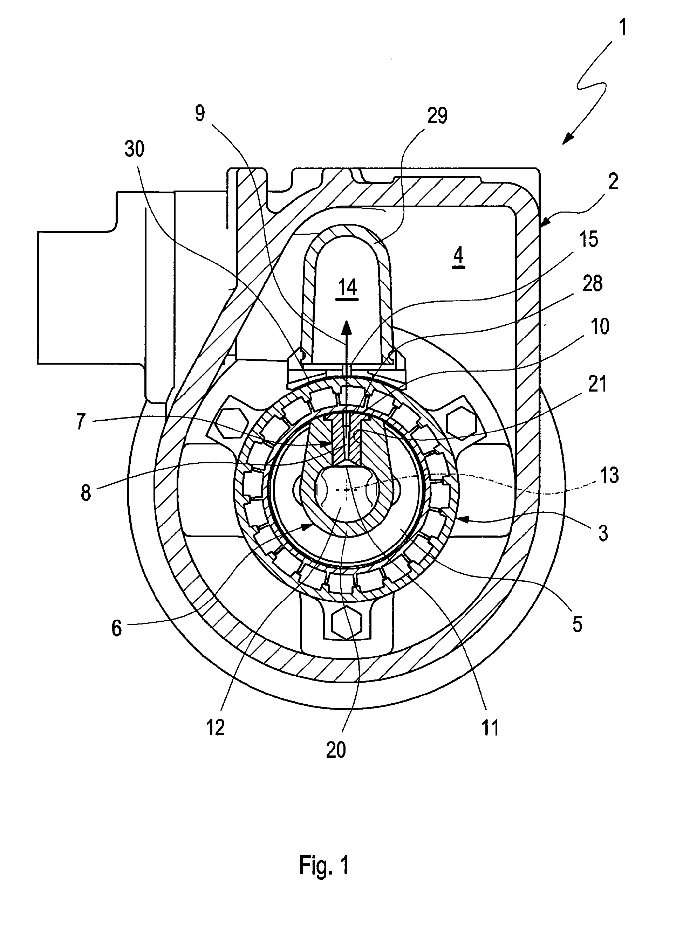

Entsprechend Fig. 1 weist eine Filteranlage 1 ein Gehäuse 2 auf, in dem ein Filterkörper 3 angeordnet ist. Der Filterkörper 3 trennt im Gehäuse 2 einen Rohraum 4 beziehungsweise eine Rohseite 4 von einem Reinraum 5 beziehungsweise von einer Reinseite 5. Der Filterkörper 3 ist zylindrisch ausgestaltet und bevorzugt so aufgebaut, dass er im Filtrierbetrieb radial von außen nach innen durchströmt wird. Dementsprechend befindet sich der Rohraum 4 radial außerhalb des Filterkörpers 3, während der Reinraum 5 vom Filterkörper 3 umschlossen ist. Beim Filterkörper 3 kann es sich beispielsweise um ein sogenanntes Kantenspaltfilter handeln. Ebenso sind grundsätzlich beliebige andere Bauweisen für den Filterkörper 3 denkbar, wie z.B. ein Filterkörper aus micromash-Material oder aus einem plissierten Filtermaterial. Die Filteranlage 1 dient zum Entfernen von Verunreinigungen aus einem Fluid. Hierbei können insbesondere feste Partikel aus einer Flüssigkeit herausgefiltert werden. Grundsätzlich ist es ebenso möglich, feste oder flüssige Partikel aus einem Gas herauszufiltern. Das verunreinigte Fluid wird über einen entsprechenden, hier nicht gezeigten Zulauf dem Inneren des Gehäuses 2, also dem Rohraum 4 zugeführt, während das gereinigte Fluid über einen entsprechenden, hier nicht gezeigten Ablauf aus dem Inneren des Filterkörpers 3, also aus dem Reinraum 5 abgeführt wird.

Während des Filtrierbetriebs können sich die Verunreinigungen, die den Filterkörper 3 nicht durchströmen können, an der rohseitigen Außenseite des Filterkörpers 3 ansammeln, eindicken und insbesondere einen sogenannten Filterkuchen bilden. Eine derartige Schicht aus Verunreinigungen erhöht zwar die Filtrationswirkung des Filterkörpers 3, erhöht jedoch auch den Durchströmungswiderstand des Filterkörpers 3. Dementsprechend ist es erforderlich, die angelagerten Verunreinigungen regelmäßig zu entfernen. Zu diesem Zweck ist die Filteranlage 1 mit einer Rückspüleinrichtung 6 ausgestattet, mit deren Hilfe der Filterkörper 3 rückspülbar ist. Das heißt, der Filterkörper 3 wird mit einem geeigneten Spülmedium entgegen der Reinigungsrichtung durchströmt. Das bedeutet im vorliegenden Fall, dass die Rückspüleinrichtung 6 auf geeignete Weise ein Rückspülmedium vom Reinraum 5 her in Richtung Rohraum 4 durch den Filterkörper 3 antreibt. Hierzu weist die Rückspüleinrichtung 6 zumindest eine Rückspüldüse 7 auf. Mit Hilfe dieser Rückspüldüse 7 kann die Rückspüleinrichtung 6 den Filterkörper 3 mit dem jeweiligen Spülmedium beaufschlagen. Die Rückspüldüse 7 weist zumindest eine Öffnung 8 auf, durch die das Spülmedium beim Rückspülen in einer Strömungsrichtung 9 strömt, die hier durch einen Pfeil angedeutet ist, und aus der Rückspüldüse 7 austritt. Die Öffnung 8 ist hierzu an ihrem Austrittsende 10 zum Filterkörper 3 hin offen und kommuniziert an ihrem Eintrittsende 11 mit einem Zulaufkanal 12. Mit Hilfe des Zulaufkanals 12 versorgt die Rückspüleinrichtung 6 die jeweilige Rückspüldüse 7 mit dem Spülmedium, das hierzu insbesondere mit einem entsprechenden, vergleichsweise hohen Spüldruck beaufschlagt sein kann. Grundsätzlich kann die Rückspüleinrichtung 6 mehr als eine solche Rückspüldüse 7 aufweisen, die in axialer Richtung des Filterkörpers 3, also parallel zur Längsmittelachse 13 des Filterkörpers 3 hintereinander angeordnet sein können.

Im gezeigten Beispiel umfasst die Rückspüleinrichtung 6 außerdem einen Ablaufkanal 14, der im Rohraum 4 angeordnet ist und der zumindest eine dem Filterkörper 3 zugewandte Einlassöffnung 15 aufweist. Durch die jeweilige Einlassöffnung 15 kann das Rückspülmedium zusammen mit den entfernten Ablagerungen in den Ablaufkanal 14 gelangen, aus dem es abtransportiert wird. Hierzu herrscht im Ablaufkanal 14 ein entsprechend niedriger Druck. Die Einlassöffnung 15 ist zweckmäßig fluchtend zur Öffnung 8 der Rückspüldüse 7 angeordnet.

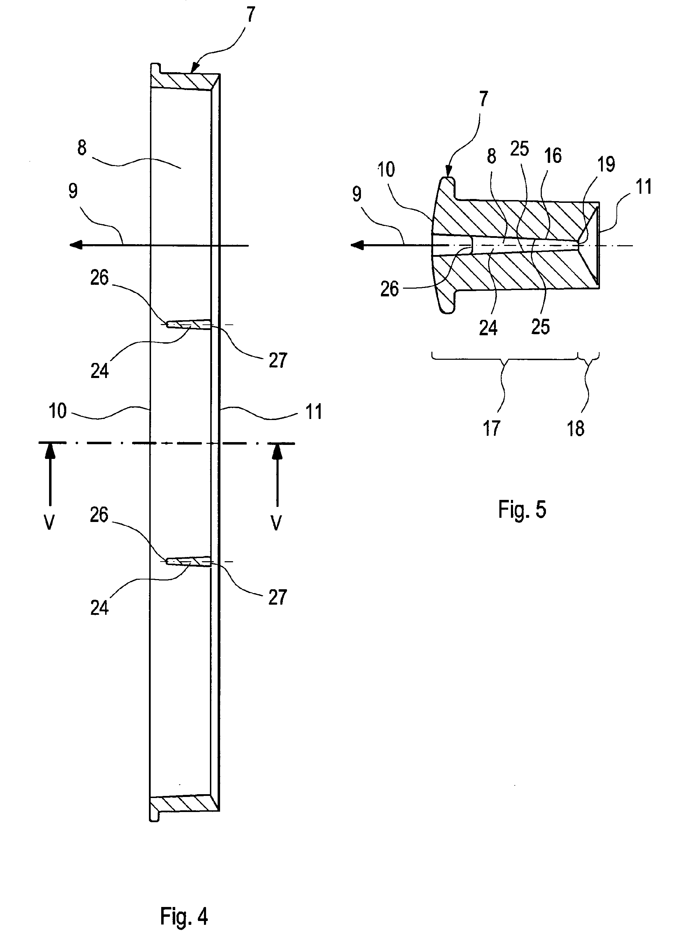

Um den gesamten Filterkörper 3 nach und nach entlang seiner gesamten Oberfläche Abreinigen zu können, kann die Filteranlage 1 außerdem mit einem hier nicht gezeigten Antrieb ausgestattet sein, der eine Relativbewegung zwischen dem Filterkörper 3 einerseits und der Rückspüldüse 7 und - soweit vorhanden - des Ablaufkanals 14 andererseits ermöglicht. Im bevorzugten Beispiel sind die Komponenten der Rückspüleinrichtung 6, also insbesondere die Rückspüldüse 7 und der Ablaufkanal 14 stationär angeordnet, während der Filterkörper 3 um seine Längsmittelachse 13 drehend angetrieben ist. Entsprechend den Fig. 1 bis 5 ist die Öffnung 8 der Rückspüldüse 7 erfindungsgemäß als Schlitzöffnung ausgestaltet, die im folgenden ebenfalls mit 8 bezeichnet wird. Diese Schlitzöffnung 8 erstreckt sich dabei quer zur Strömungsrichtung 9 geradlinig. Ferner weist die Schlitzöffnung 8 quer zur Strömungsrichtung 9 ein im wesentlichen konstantes Querschnittsprofil 16 auf. Dieses Querschnittsprofil 16 weist gemäß Fig. 5 einen Düsenabschnitt 17 auf, der sich in der Strömungsrichtung 9 aufweitet. Der sich aufweitende durchströmbare Querschnitt im Querschnittsprofil 16 führt im Düsenabschnitt 17 zu einem Druckabfall und somit zu einer Beschleunigung des Spülmediums.

Vorzugsweise ist die Schlitzöffnung 8 in ihrem Querschnittsprofil 16 außerdem mit einem Einlaufabschnitt 18 ausgestattet. Dieser Einlaufabschnitt 18 grenzt unmittelbar stromauf an den Düsenabschnitt 17 und besitzt einen sich in der Strömungsrichtung 9 reduzierenden durchströmbaren Querschnitt. Hierdurch kann bis zu einem Übergangsquerschnitt 19, in dem der Einlaufabschnitt 18 endet und der Düsenabschnitt 17 beginnt, eine Druckkonzentration realisiert werden.

Entsprechend Fig. 5 kann das Querschnittsprofil 16 im Düsenabschnitt 17 bevorzugt mit einem spitzen Winkel ausgestattet sein. Dieser kann insbesondere kleiner als 10° sein. Im Unterschied dazu kann das Querschnittsprofil 16 im Einlaufabschnitt 18 einen stumpfen Winkel aufweisen. Dieser stumpfe Winkel kann insbesondere größer als 100° sein.

Vorzugsweise ist das Querschnittsprofil 16 im Düsenabschnitt 17 sowie im Einlaufabschnitt 18 jeweils durch geradlinige Wandkonturen begrenzt. Gemäß einer besonders vorteilhaften Ausführungsform kann die Schlitzöffnung 8 im Querschnittsprofil 16 eine Laval-Düse bilden. Eine derartige Laval-Düse eignet sich in besonderer Weise zur Beschleunigung des Spülmediums.

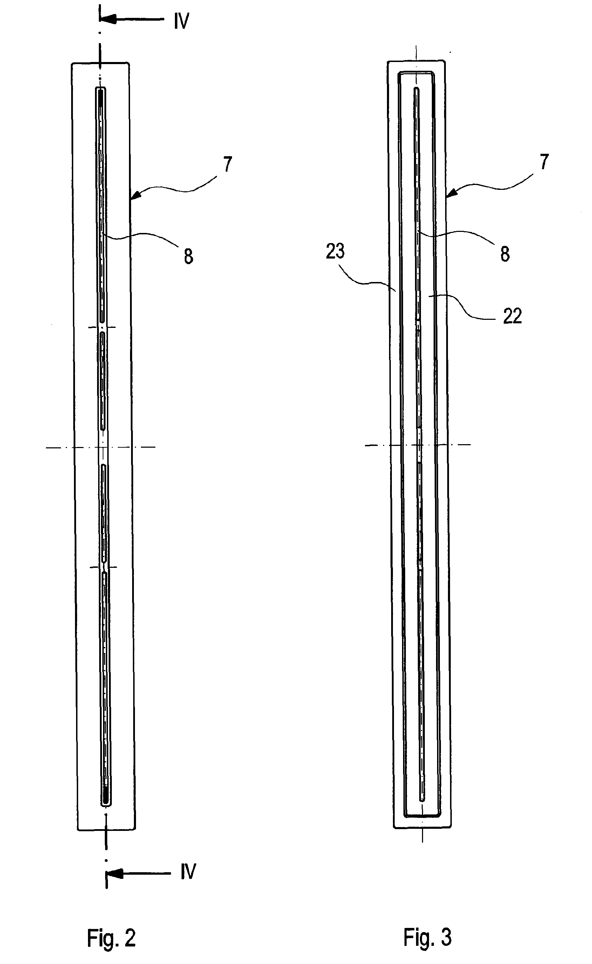

Bei der in Fig. 2 gezeigten Ausführungsform ist der Düsenkörper 7 aus einem Stück hergestellt und kann auf diese Weise in einen den Zulaufkanal 12 enthaltenden Zulaufkanalträger 20 eingesetzt werden, der hierfür eine entsprechende Düsenkörperaufnahme 21 aufweist.

Im Unterschied dazu zeigt Fig. 3 eine Ausführungsform, bei welcher die Rückspüldüse 7 zweiteilig ausgebildet ist. In Fig. 3 umfasst die Rückspüldüse 7 daher einen Düsenkörper 22, der die wenigstens eine Schlitzöffnung 8 enthält, sowie einen Düsenträger 23, in den der Düsenkörper 22 eingesetzt ist. Düsenkörper 22 und Düsenträger 23 bilden zweckmäßig voneinander separat hergestellte Bauteile, die insbesondere aus unterschiedlichen Materialien hergestellt sein können. Im montierten Zustand kann der Düsenkörper 22 am Düsenträger 23 auf geeignete Weise befestigt sein. Beispielsweise kann der Düsenkörper 22 mit dem Düsenträger 23 verschweißt sein. Der Düsenkörper 22 kann als Spritzgussteil, zum Beispiel aus Kunststoff, ausgestaltet sein. Ebenso ist es grundsätzlich möglich den Düsenträger 23 als Spritzgussteil, zum Beispiel aus Kunststoff, auszugestalten.

Entsprechend den Fig. 2 und 4 kann die Schlitzöffnung 8 in ihrer Längsrichtung durch einen oder durch mehrere Stege 24 unterbrochen sein. Der jeweilige Steg 24 befindet sich in der Schlitzöffnung 8 und erstreckt sich dabei parallel zur Strömungsrichtung 9. Der jeweilige Steg 24 dient zur Aussteifung des Düsenkörpers 22 beziehungsweise zur Aussteifung der Rückspüldüse 7. Hierzu verbindet der jeweilige Steg 24 einander gegenüberliegende, die Schlitzöffnung 8 quer zur Strömungsrichtung 9 begrenzende Wandabschnitte 25. Vorzugsweise ist der jeweilige Steg 24 so ausgestaltet, dass er sich ausschließlich im Düsenabschnitt 17 befindet. Dabei kann eine Abströmkante 26 des jeweiligen Stegs 24 einen Abstand gegenüber dem Austrittsende 10 der Schlitzöffnung 8 aufweisen. Im Unterschied dazu kann eine Anströmkante 27 genau am Eintrittsende des Düsenabschnitts 17 angeordnet sein, also im wesentlichen in der Ebene des Übergangsquerschnitts 19. Im Längsschnitt der Rückspüldüse 7 kann der jeweilige Steg 24 gemäß Fig. 4 ein sich in der Strömungsrichtung 9 verjüngendes Profil aufweisen.

Entsprechend einer besonders vorteilhaften Ausführungsform kann die Rückspüldüse 7 relativ zum Filterkörper 3 so montiert werden, dass sie in der Strömungsrichtung 9 vom Filterkörper 3 beabstandet ist, also keinen direkten Kontakt mit dem Filterkörper 3 besitzt. Hierzu ist die Rückspüldüse 7 in radialer Richtung vom Filterkörper 3 beabstandet. In entsprechender Weise kann auch der Zulaufkanalträger 20 beabstandet zum Filterkörper 3 angeordnet sein, so dass auch in der Umfangsrichtung des Filterkörpers 3 beiderseits der Rückspüldüse 7 kein Kontakt zwischen dem Zulaufkanalträger 20 und dem Filterkörper 3 vorliegt. Hierdurch kann eine besonders reibungsarme und verschleißarme Wechselwirkung zwischen Rückspüleinrichtung 6 und Filterkörper 3 zumindest auf der Reinseite 5 realisiert werden. Besagter Abstand zwischen Rückspüldüse 7 und dem Filterkörper 3 ist in Fig. 1 mit 28 bezeichnet. Er entspricht einem Spalt, der radial zwischen dem Filterkörper 3 und der Rückspüldüse 7 ausgebildet ist.

Im Rohraum 4 kann ein Ablaufkanalträger 29 grundsätzlich ebenfalls so gegenüber dem Filterkörper 3 positioniert sein, dass sich hier ebenfalls ein radialer Spalt 30 zwischen dem Filterkörper 3 und dem Ablaufkanalträger 29 ausbildet. Durch eine in Umfangsrichtung relativ große Überlappung kann dabei eine hinreichende Dichtwirkung erzielt werden. Somit kann auch auf der Rohseite 4 eine reduzierte Reibung und ein reduzierter Verschleiß zwischen Filterkörper 3 und Ablaufkanalträger 29 realisiert werden.

Als Spülmedium kann beispielsweise das bereits gereinigte Fluid verwendet werden. Beim Reinigen einer Flüssigkeit wird als Spülmedium ein Gas genutzt, wie zum Beispiel Pressluft. Demnach kommen nur kompressible Medien als Spülmedium zum Einsatz. Je nach Anwendungsfall können in Abhängigkeit des verwendeten Spülmediums unterschiedlich gestaltete Rückspüldüsen 7 zum Einsatz kommen. Hier ermöglicht die zweiteilige Bauweise der Rückspüldüse 7 mit Düsenkörper 22 und Düsenträger 23 einen einfachen Austausch des jeweiligen Düsenkörpers 22.

## Patentansprüche

1. Filteranlage (1) zum Entfernen von Verunreinigungen aus einem Fluid,
- mit wenigstens einem zylindrischen Filterkörper (3), der einen Reinraum (5) von einem Rohraum (4) trennt,
- mit wenigstens einer Rückspüleinrichtung (6) zum Rückspülen des jeweiligen Filterkörpers (3),
- wobei die Rückspüleinrichtung (6) mit wenigstens einer Rückspüldüse (7) zur Beaufschlagung des Filterkörpers (3) mit einem gasförmigen Spülmedium ausgestattet ist, die zumindest eine Öffnung (8) aufweist, durch die das Spülmedium beim Rückspülen in einer Strömungsrichtung (9) strömt und aus der Rückspüldüse (7) austritt,
- wobei die zumindest eine Öffnung als Schlitzöffnung (8) ausgestaltet ist, die sich quer zur Strömungsrichtung (9) geradlinig mit einem konstanten Querschnittsprofil (16) erstreckt,
- mit einem Antrieb zum Erzeugen einer relativen Drehverstellung zwischen dem Filterkörper (3) und der Rückspüldüse (7) um eine Längsmittelachse (13) des Filterkörpers (3),
**dadurch gekennzeichnet,**
- **dass** das Querschnittsprofil (16) einen sich in der Strömungsrichtung (9) aufweitenden Düsenabschnitt (17) aufweist,
- **dass** die jeweilige Schlitzöffnung (8) in ihrem Querschnittsprofil (16) einen Einlaufabschnitt (18) aufweist, der unmittelbar stromauf an den Düsenabschnitt (17) angrenzt und sich in der Strömungsrichtung (9) reduziert.

2. Filteranlage nach Anspruch 1,
**dadurch gekennzeichnet,**
- **dass** sich das Querschnittsprofil (16) im Düsenabschnitt (17) mit einem spitzen Winkel aufweitet, der insbesondere weniger als 10° aufweisen kann, und/oder
- **dass** sich das Querschnittsprofil (16) im Einlaufabschnitt (18) mit einem stumpfen Winkel reduziert, der insbesondere mehr als 100° aufweisen kann, und/oder
- **dass** das Querschnittsprofil (16) im Düsenabschnitt (17) durch geradlinige Wandkonturen oder Wandabschnitte (25) begrenzt ist, und/oder
- **dass** das Querschnittsprofil im Einlaufabschnitt (18) durch geradlinige Wandkonturen oder Wandabschnitte (25) begrenzt ist, und/oder
- **dass** das Querschnittsprofil (16) als Laval-Düse ausgestaltet ist.

3. Filteranlage nach einem der Ansprüche 1 bis 2,
**dadurch gekennzeichnet,**
- **dass** die Rückspüldüse (7) aus einem Stück hergestellt ist, oder
- **dass** die Rückspüldüse (7) einen Düsenkörper (22), der die wenigstens eine Schlitzöffnung (8) enthält, und einen Düsenträger (23) aufweist, in den der Düsenkörper (22) eingesetzt ist.

4. Filteranlage nach Anspruch 3,
**dadurch gekennzeichnet,**
- **dass** Düsenkörper (22) und Düsenträger (23) voneinander separat hergestellte Bauteile sind, und/oder
- **dass** der Düsenkörper (22) im oder am Düsenträger (23) befestigt ist, und/oder
- **dass** der Düsenkörper (22) mit dem Düsenträger (22) verschweißt ist, und/oder
- **dass** der Düsenkörper (22) als Spritzgussteil, insbesondere aus Kunststoff, ausgestaltet ist, und/oder
- **dass** der Düsenträger (23) als Spritzgussteil, insbesondere aus Kunststoff, ausgestaltet ist.

5. Filteranlage nach einem der Ansprüche 1 bis 4,
**dadurch gekennzeichnet,**
**dass** in der Schlitzöffnung (8) zumindest ein Steg (24) angeordnet ist, der die Schlitzöffnung (8) begrenzende, einander gegenüberliegende Wandabschnitte (25) miteinander verbindet.

6. Filteranlage nach Anspruch 5,
**dadurch gekennzeichnet,**
- **dass** der jeweilige Steg (24) ausschließlich im Düsenabschnitt (17) angeordnet ist, und/oder
- **dass** eine Abströmkante (26) des jeweiligen Stegs (24) vom Austrittsende (10) des Düsenabschnitts (17) beabstandet angeordnet ist, und/oder
- **dass** eine Anströmkante (27) des jeweiligen Stegs (24) am Eintrittsende (19) des Düsenabschnitts (17) angeordnet ist, und/oder
- **dass** der jeweilige Steg (24) sich in der Strömungsrichtung (9) verjüngt.

7. Filteranlage nach einem der Ansprüche 1 bis 6,
**dadurch gekennzeichnet,**
**dass** die jeweilige Rückspüldüse (7) in der Strömungsrichtung (9) vom jeweiligen Filterkörper (3) beabstandet angeordnet ist.

8. Filteranlage nach einem der Ansprüche 1 bis 7,
**dadurch gekennzeichnet,**
**dass** die Strömungsrichtung (9) radial zum Filterkörper (3) orientiert ist.

## Claims

1. A filter system (1) for removing impurities from a fluid,
- having at least one cylindrical filter body (3) which separates a clean side (5) from an unclean side (4),
- having at least one backflush device (6) for backflushing the respective filter body (3),
- wherein the backflush device (6) is provided with at least one backflush nozzle (7) for applying a gaseous rinse medium to the filter body (3) which has at least one opening (8) through which the rinse medium flows in a flow direction (9) and exits from the backflush nozzle (7) during backflushing,
- wherein the at least one opening is configured as a slit opening (8) which extends in a straight line transversely with respect to the flow direction (9) with a constant cross-sectional profile (16),
- having a drive for generating a relative rotational movement between the filter body (3) and the backflush nozzle (7) about a longitudinal centre axis (13) of the filter body (3),
**characterized in**
- **that** the cross-sectional profile (16) has a nozzle segment (17) which expands in the flow direction (9),
- **that** the respective slit opening (8) has an entry segment (18) in its cross-sectional profile (16), which is adjacent directly upstream of the nozzle segment (17) and decreases in the flow direction (9).

2. The filter system according to Claim 1,
**characterised in that**
- the cross-sectional profile (16) in the nozzle segment (17) expands at an acute angle which can in particular be less than 10°, and/or
- the cross-sectional profile (16) in the entry segment (18) decreases at an obtuse angle which can in particular be greater than 100°, and/or
- the cross-sectional profile (16) in the nozzle segment (17) is bounded by straight wall contours or wall segments (25), and/or
- the cross-sectional profile in the entry segment (18) is bounded by straight wall contours or wall segments (25), and/or
- the cross-sectional profile (16) is configured as a de Laval nozzle.

3. The filter system according to one of Claims 1 to 2, **characterised in that**
- the backflush nozzle (7) is produced from one piece, or
- the backflush nozzle (7) has a nozzle body (22) which contains the at least one slit opening (8) and a nozzle support (23) into which the nozzle body (22) is inserted.

4. The filter system according to Claim 3, **characterised in that**
- the nozzle body (22) and the nozzle support (23) are components which are produced separately from each other, and/or
- the nozzle body (22) is fixed in or on the nozzle support (23), and/or
- the nozzle body (22) is welded to the nozzle support (22), and/or
- the nozzle body (22) is configured as an injection moulded part, in particular of plastic, and/or
- the nozzle support (23) is configured as an injection moulded part, in particular of plastic.

5. The filter system according to one of Claims 1 to 4, **characterised in that** at least one web (24) is arranged in the slit opening (8), which connects mutually opposite wall segments (25) which bound the slit opening (8).

6. The filter system according to Claim 5, **characterised in that**
- the respective web (24) is arranged exclusively in the nozzle segment (17), and/or
- an outflow edge (26) of the respective web (24) is arranged at a distance from the exit end (10) of the nozzle segment (17), and/or
- an inflow edge (27) of the respective web (24) is arranged at the entry end (19) of the nozzle segment (17), and/or
- the respective web (24) tapers in the flow direction (9).

7. The filter system according to one of Claims 1 to 6,
**characterised in that**
the respective backflush nozzle (7) is arranged at a distance from the respective filter body (3) in the flow direction (9).

8. The filter system according to one of Claims 1 to 7,
**characterized in that**
the flow direction (9) is oriented radially to the filter body (3).

## Revendications

1. Installation de filtrage (1) pour éliminer les impuretés d'un fluide,
- comportant au moins un corps de filtre (3) cylindrique, qui sépare un espace purifié (5) d'un espace brut (4),
- comportant au moins un dispositif de rétrolavage (6) pour effectuer un rétrolavage du corps de filtre (3) respectif,
- dans laquelle le dispositif de rétrolavage (6) est équipé d'au moins une buse de rétrolavage (7) pour solliciter le corps de filtre (3) avec un milieu de rinçage gazeux, qui présente au moins une ouverture (8), à travers laquelle le milieu de rinçage s'écoule dans une direction d'écoulement (9) lors du rétrolavage et ressort de la buse de rétrolavage (7),
- dans laquelle au moins une ouverture est conçue comme une ouverture en fente (8), qui s'étend transversalement à la direction d'écoulement (9) en ligne droite avec un profil de section transversale (16) constant,
- comportant un entraînement pour générer un réglage en rotation relatif entre le corps de filtre (3) et la buse de rétrolavage (7) autour d'un axe médian longitudinal (13) du corps de filtre (3),
**caractérisée en ce que**
- le profil de section transversale (16) présente une portion de buse (17) s'élargissant dans la direction d'écoulement (9),
- l'ouverture en fente respective (8) présente dans son profil de section transversale (16) une portion d'entrée (18), qui est directement contiguë à la portion de buse (17) en amont et se réduite dans la direction d'écoulement (9).

2. Installation de filtrage selon la revendication 1,
**caractérisée en ce que**
- le profil de section transversale (16) dans la portion de buse (17) s'élargit avec un angle aigu, qui peut notamment s'élever à moins de 10°, et/ou
- le profil de section transversale (16) dans la portion d'entrée (18) se réduite avec un angle obtus, qui peut notamment s'élever à moins de 100°, et/ou
- le profil de section transversale (16) dans la portion de buse (17) est délimité par des contours de paroi ou des portions de paroi (25) droits, et/ou
- le profil de section transversale dans la portion d'entrée (18) est délimité par des contours de paroi ou des portions de paroi (25) droits, et/ou
- le profil de section transversale (16) est conçu comme une buse Laval.

3. Installation de filtrage selon une des revendications 1 à 2,
**caractérisée en ce que**
- la buse de rétrolavage (7) est fabriquée en une seule pièce, ou
- la buse de rétrolavage (7) contient un corps de buse (22), qui contient au moins une ouverture de fente (8), et présente un support de buse (23), dans lequel un corps de buse (22) est inséré.

4. Installation de filtrage selon la revendication 3,
**caractérisée en ce que** :
- le corps de buse (22) et le support de buse (23) sont des composants fabriqués séparément l'une de l'autre, et/ou
- le corps de bise (22) est fixé dans ou sur le support de buse (23), et/ou
- le corps de buse (22) est soudé au support de buse (22), et/ou
- le corps de bise (22) est conçu comme une pièce moulée par injection, notamment en plastique, et/ou
- le support de buse (23) est conçu comme une pièce moulée par injection, notamment en plastique.

5. Installation de filtrage selon une des revendications 1 à 4,
**caractérisée en ce que**
dans l'ouverture en fente (8) au moins un gradin (24) est disposé, qui relie l'une à l'autre les portions de paroi (25) en vis-à-vis délimitant l'ouverture en fente (8).

6. Installation de filtrage selon la revendication 5,
**caractérisée en ce que**
- le gradin respectif (24) est disposé exclusivement dans la portion de buse (17), et/ou
- un bord de fuite (26) du gradin respectif (24) est disposé en espacement par rapport à l'extrémité de sortie (10) de la portion de buse (17), et/ou
- un bord d'attaque (27) du gradin respectif (24) est disposé sur l'extrémité d'entrée (19) de la portion de buse (17), et/ou
- le gradin respectif (24) va en s'amincissant dans la direction d'écoulement (9).

7. Installation de filtrage selon une des revendications 1 à 6,
**caractérisée en ce**
**que** la buse de rétrolavage (7) respective est disposée en espacement par rapport au corps de filtre respectif (3) dans la direction d'écoulement (9).

8. Installation de filtrage selon une des revendications 1 à 7,
**caractérisée en ce**
**que** la direction d'écoulement (9) es orientée radialement par rapport au corps de filtre (3).
